(19) Europäisches Patentamt
European Patent Office
Office européen des brevets

(11) **EP 4 733 421 A1**

(12) **EUROPEAN PATENT APPLICATION**
published in accordance with Art. 153(4) EPC

(43) Date of publication:
**29.04.2026 Bulletin 2026/18**

(21) Application number: **24845433.2**

(22) Date of filing: **11.07.2024**

(51) International Patent Classification (IPC):
***C21B 5/00*** (2006.01)    ***C22B 1/14*** (2006.01)

(52) Cooperative Patent Classification (CPC):
**C21B 5/00; C22B 1/14;** Y02P 10/143

(86) International application number:
**PCT/JP2024/025172**

(87) International publication number:
**WO 2025/023052 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.07.2023 JP 2023120547**

(71) Applicant: **JFE Steel Corporation**
**Tokyo, 100-0011 (JP)**

(72) Inventors:
• **KAWASHIRI, Yuki**
**Tokyo 100-0011 (JP)**

• **TAKEHARA, Kenta**
**Tokyo 100-0011 (JP)**
• **HIROSAWA, Toshiyuki**
**Tokyo 100-0011 (JP)**
• **IKEDA, Kohei**
**Tokyo 100-0011 (JP)**
• **SAEKI, Michitoshi**
**Tokyo 100-0011 (JP)**

(74) Representative: **Haseltine Lake Kempner LLP**
**One Portwall Square**
**Portwall Lane**
**Bristol BS1 6BH (GB)**

(54) **BLAST FURNACE OPERATION METHOD**

(57)    Provided is a blast furnace operating method with which $CO_2$ emissions can be reduced.

In the blast furnace operating method, molten pig iron is produced by charging agglomerated ore into the blast furnace from the top and supplying a gaseous reducing agent from a lower portion of the blast furnace. The amount of the gaseous reducing agent supplied is adjusted to 100 Nm$^3$/t or more, and the concentration of FeO in the agglomerated ore is adjusted to 10% or less.

FIG. 3

EP 4 733 421 A1

## EP 4 733 421 A1

**Description**

Technical Field

The present invention relates to a blast furnace operating method for producing molten pig iron by charging agglomerated ore used as an iron raw material into a blast furnace from the top and supplying a gaseous reducing agent from a bottom portion of the blast furnace.

Background Art

The blast furnace process (a molten pig iron production process using a blast furnace) is a high-efficiency ironmaking process suitable for mass production and contributes to 70% or more of the crude steel production in Japan. However, in the blast furnace process, a large amount of coal is consumed as a reducing agent to thereby smelt and reduce iron oxides in iron ore. Therefore, the blast furnace process is also a high $CO_2$ emission process. In view of the recent social circumstances regarding environmental issues, reducing $CO_2$ emissions from the blast furnace process is an urgent task for the steel industry.

There are several methods for reducing $CO_2$ emissions from the blast furnace process. In one method, hydrogen is used as a gaseous reducing agent. Examples of the proposed means for utilizing hydrogen include: a method in which hydrogen is simply blown from tuyeres together with blast air; a method in which hydrogen in the form of a specific compound (e.g., a hydrocarbon such as methane) is blown from the tuyeres; and a method in which a hydrogen-based reducing gas is blown from a portion other than the tuyeres.

One major reason that the $CO_2$ emissions from the blast furnace can be reduced by blowing a gaseous reducing agent such as hydrogen into the blast furnace is an increase in the gaseous reduction degree of iron oxides in the agglomerated ore.

The agglomerated ore charged into the blast furnace is reduced mainly through two processes. The first process is gaseous reduction by a gaseous reducing agent such as CO or hydrogen. The second process is smelting reduction by carbon (C) in coke used as a solid reducing agent. In the blast furnace process, gaseous reduction proceeds while the raw materials (the agglomerated ore and the solid reducing agent) descend from the upper portion of the blast furnace to the bottom portion. Then the agglomerated ore that has not been fully reduced by the gaseous reduction is smelted and subjected to smelting reduction by the solid reducing agent, and the reduction reaction is thereby completed.

The difference between the gaseous reduction and the smelting reduction is the amount of heat required for the reduction reaction. The gaseous reduction is a reduction reaction accompanied by slight heat generation (or absorption). In contrast, the smelting reduction is a reduction reaction accompanied by significant heat absorption. By increasing the proportion of the gaseous reduction by the blown gaseous reducing agent (such as hydrogen gas), the proportion of the smelting reduction by the solid reducing agent can be reduced. This allows a reduction in the heat required per ton of molten pig iron in the blast furnace. Therefore, the amount of the solid reducing agent (carbon) used can be reduced, and the $CO_2$ emissions can be reduced.

As described above, in the blast furnace process in which the gaseous reducing agent (such as hydrogen gas) is blown into the blast furnace, it is essential to increase the proportion of the gaseous reduction of the agglomerated ore in order to reduce the amount of the solid reducing agent (carbon) used. However, it is known that, even when the gaseous reduction by the gaseous reducing agent is caused to proceed at a temperature (for example, 900°C) at which the agglomerated ore (pellets or sintered ore) does not start to melt, the reduction reaction of the agglomerated ore via gaseous reduction stagnates when the reduction reaction via gaseous reduction reaches a prescribed state (reduction degree: 70%). Specifically, a microstructure that impedes the gaseous reduction is present inside the agglomerated ore, and the reduction reaction via the gaseous reduction stagnates due to the influence of this microstructure. The stagnation of the reduction reaction means that the rate of change in the reduction degree per unit time (the reduction rate) decreases abruptly.

Therefore, various methods have been proposed in which the properties of agglomerated ore are controlled to increase the proportion of gaseous reduction of the agglomerated ore. Patent Literature 1 discloses a method for preventing stagnation of the reduction reaction in a high-temperature state by adding dolomite or limestone to pellets to increase their melting point. Patent Literature 2 discloses the microstructure of a sintered ore that contains a large amount of $SiO_2$ and can easily undergo a reduction reaction in a high-temperature state while the strength of the sintered ore is maintained.

Citation List

Patent Literature

PTL 1: Japanese Examined Patent Application Publication No. 3-77853
PTL 2: Japanese Patent No. 7035869

Non Patent Literature

NPL 1: TETSU TO HAGANE (Journal of the Iron and Steel Institute of Japan), Vol. 79 (1993) 9, N618
NPL 2: TETSU TO HAGANE (Journal of the Iron and Steel Institute of Japan), Vol. 79 (1993) 10, N711
NPL 3: TETSU TO HAGANE (Journal of the Iron and Steel Institute of Japan), Vol. 73 (1987) 15, p. 1956
NPL 4: TETSU TO HAGANE (Journal of the Iron and Steel Institute of Japan), Vol. 69 (1983) 3, p. 363

Summary of Invention

Technical Problem

However, the method disclosed in Patent Literature 1 is suitable for preventing the stagnation of the reduction reaction when the agglomerated ore is in a high-temperature state, and it is difficult to apply the method to the stagnation of the reduction reaction in a temperature state in which the smelting of the agglomerated ore does not start. In Patent Literature 2, the target reduction degree in a high-temperature state is 71% and is comparable to the reduction degree (reduction degree: 70%) at which the stagnation of the reduction reaction via gaseous reduction occurs. Therefore, the stagnation of the reduction reaction via gaseous reduction is not taken into consideration in Patent Literature 2. With the method disclosed in Patent Literature 2, a sintered ore that can easily undergo the reduction reaction can be obtained. However, there is no description about stagnation of the reduction reaction in relation to temperature conditions, and it is therefore difficult to apply this method to the stagnation of the reduction reaction in a temperature state in which the smelting of the agglomerated ore does not start.

The present invention has been made in view of the foregoing circumstances, and it is an object to provide a blast furnace operating method with which $CO_2$ emissions can be reduced.

Solution to Problem

The present invention aimed to solve the foregoing problems is summarized as follows.

[1] A blast furnace operating method for producing molten pig iron by charging agglomerated ore into a blast furnace from a top of the blast furnace and supplying a gaseous reducing agent from a lower portion of the blast furnace, wherein an amount of the gaseous reducing agent supplied is adjusted to 100 $Nm^3$/t or more, and wherein a concentration of FeO in the agglomerated ore is adjusted to 10% by mass or less.
[2] The blast furnace operating method according to [1], wherein the concentration of FeO in the agglomerated ore is 5% by mass or less.

Advantageous Effects of Invention

According to the present invention, $CO_2$ emissions can be reduced.

Brief Description of Drawings

[Fig. 1] Fig. 1 is an illustration showing a charging state of a gaseous reducing agent and a charging state of a solid reducing agent during operation of a blast furnace.
[Fig. 2] Fig. 2 is a graph showing the relation between the amount of the gaseous reducing agent and an optimal gaseous reduction degree.
[Fig. 3] Fig. 3 is a graph showing the relation between the concentration of FeO in the agglomerated ore and a stagnant gaseous reduction degree.

Description of Embodiment

The present invention will next be described using an embodiment of the invention.

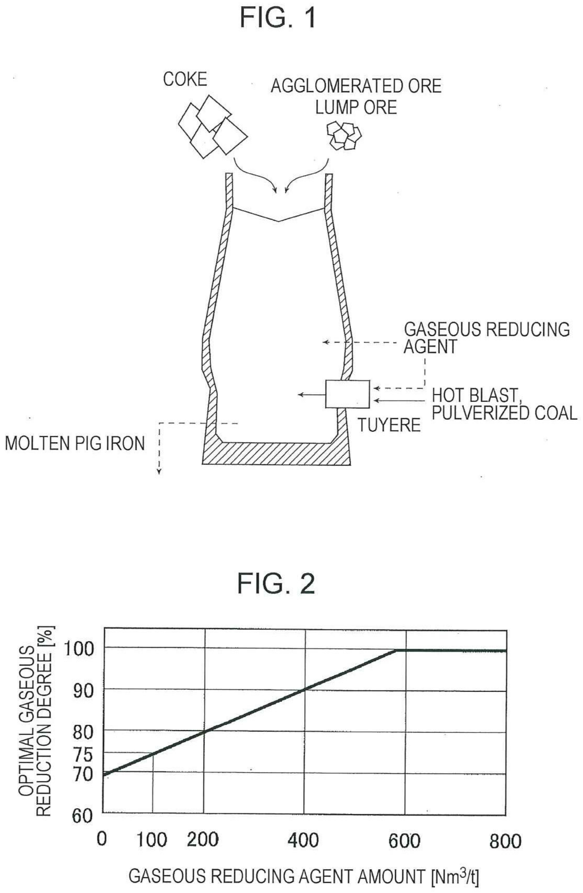

As shown in Fig. 1, the present invention relates to a blast furnace operating method in which agglomerated ore and lump ore (which are referred to as "agglomerated ore") used as iron raw materials are caused to undergo a reduction reaction in the furnace using solid reducing agents (coke and pulverized coal) charged from the top of the blast furnace and tuyeres and a gaseous reducing agent charged from a lower portion of the furnace to thereby obtain molten pig iron from a taphole disposed in a lower portion of the blast furnace.

The present inventors have first focused on the relation between the amount of the gaseous reducing agent blown into the blast furnace (hereinafter referred to as the "gaseous reducing agent amount") and a gaseous reduction degree. In particular, the inventors have focused on the relation between the gaseous reducing agent amount and the gaseous reduction degree when the total of the amount of the solid reducing agent used (which is hereinafter referred to as the "solid reducing agent amount") and the gaseous reducing agent amount is minimized (this gaseous reduction degree is hereinafter referred to as the "optimal gaseous reduction degree"). Then the inventors have calculated the optimal gaseous reduction degree % with respect to the gaseous reducing agent amount $Nm^3/t$ based on a heat and material balance calculation in the blast furnace in consideration of the reduction equilibrium of wustite by carbon monoxide (CO) and hydrogen gas (see Non Patent Literature 1 and Non Patent Literature 2). Here, the optimal gaseous reduction degree is the value obtained to minimize the total amount of the reducing agents (the total of the solid reducing agent amount and the gaseous reducing agent amount) from the viewpoint of the supply of heat and the functions of the reducing agents in the furnace and is calculated each time based on the amounts of the reducing agents used (the solid reducing agent amount and the gaseous reducing agent amount).

The gaseous reduction degree means the proportion of gaseous reduction in the total reduction reaction (gaseous reduction and smelting reduction) when the agglomerated ore charged into the blast furnace undergoes the reduction reaction. The gaseous reducing agent may include not only gases such as hydrogen and carbon monoxide (CO) that themselves function as gaseous reducing agents but also gases such as methane and ammonia that function as gaseous reducing agents through oxidation reactions or thermal decomposition reactions in the blast furnace.

Regarding the gaseous reducing agent amount, when, for example, 1 $Nm^3$ of methane is blown into the blast furnace, the methane reacts with oxygen in the blast air to generate 1 $Nm^3$ of carbon monoxide and 2 $Nm^3$ of hydrogen. In this case, the total amount of the gaseous reducing agents generated is 3 $Nm^3$. Therefore, when 1 $Nm^3$ of methane is blown into the blast furnace, the gaseous reducing agent amount is counted as 3 $Nm^3$.

When, for example, 1 $Nm^3$ of ammonia is blown into the blast furnace, the ammonia thermally decomposes into 1.5 $Nm^3$ of hydrogen and 0.5 $Nm^3$ of nitrogen. Since nitrogen does not function as a reducing agent, the gaseous reducing agent amount when 1 $Nm^3$ of ammonia is blown into the blast furnace is counted as 1.5 $Nm^3$.

The gaseous reducing agent may contain impurities such as nitrogen. In this case also, the gaseous reducing agent amount is counted based on the amount of the gaseous reducing agent generated in the blast furnace. Therefore, the gaseous reducing agent may be a mixture of a plurality of types of gases.

The temperature of the gaseous reducing agent is preferably lower than or equal to 1300°C, which is the hot blast air temperature in the blast furnace. To adjust the optimal gaseous reduction degree to be higher than the reduction degree at which stagnation of the reduction reaction via gaseous reduction occurs (reduction degree: 70%), the temperature of the gaseous reducing agent is more preferably lower than or equal to 500°C and still more preferably lower than or equal to 100°C.

The concentration of the gaseous reducing agent actually contributing to the gaseous reduction in the gaseous reducing agent blown into the blast furnace is preferably 90% by volume or more and more preferably 95% by volume or more.

The value of the optimal gaseous reduction degree with respect to the gaseous reducing agent amount was calculated as follows. The gaseous reducing agent (assumed to be 100% by volume of normal temperature hydrogen) was blown into a blast furnace with a thermal reserve zone temperature of 1000°C, a blast air temperature of 1100°C, a blast air moisture content of 20 g/$Nm^3$, and a heat loss of 100 Mcal/t, and the gaseous reduction degree at which the solid reducing agent amount was minimized was calculated. In this case, the maximum value of the shaft efficiency was set to 0.95 [-: dimensionless number].

Fig. 2 shows the relation between the gaseous reducing agent amount $Nm^3/t$ and the optimal gaseous reduction degree %. As can be seen in Fig. 2, when the gaseous reducing agent amount exceeds 100 $Nm^3/t$, it can be confirmed that the optimal gaseous reduction degree exceeds 75%. Specifically, as can be seen, when the gaseous reducing agent amount exceeds 100 $Nm^3/t$, it can be confirmed that the optimal gaseous reduction degree exceeds the reduction degree in a state in which stagnation of the reduction reaction of the agglomerated ore via gaseous reduction occurs (reduction degree: 70%). As the gaseous reducing agent amount increases, the amount of reduction in $CO_2$ during the operation of the blast furnace increases. However, the change in the amount of reduction in $CO_2$ is saturated beyond a certain point. Therefore, the gaseous reducing agent amount is preferably 800 $Nm^3/t$ or less and more preferably 600 $Nm^3/t$ or less.

Next, the inventors produced various agglomerated ores and carefully observed changes in the produced agglomerated ores during the reduction reaction via gaseous reduction. The inventors thus clarified the state of the microstructure in the agglomerated ore responsible for the stagnation of the reduction reaction and conducted studies on a method for preparing agglomerated ore capable of preventing the stagnation of the reduction reaction.

Specifically, agglomerated ores with controlled FeO concentrations were prepared and each subjected to gaseous reduction at a given temperature using a gaseous reducing agent having a specific chemical composition, and the change in the mass during the gaseous reduction was detected. The concentration of FeO means the value of FeO measured by chemical analysis and more precisely means the concentration of FeO calculated from the concentration of $Fe^{2+}$ ions. The concentration of FeO measured by chemical analysis means the weight percentage of an oxide of divalent iron ($Fe^{2+}$) analyzed by a titration method and is obtained by evaluating the FeO portion of magnetite ($Fe_3O_4 = Fe^{+2}O \cdot Fe^{+3}_2O_3$).

Each agglomerated ore was produced by mixing prepared raw materials, granulating the mixture, and subjecting the granulated mixture to a sinter pot test to sinter the mixture. The concentration of FeO in the agglomerated ore was controlled by adjusting the amount of a binder (coke breeze) in the prepared raw materials. Alternatively, the concentration of FeO may be controlled by changing the concentration of oxygen in air supply gas, changing the firing time, etc.

The results of the analysis on the produced agglomerated ores varied from sample to sample but showed that the content of iron (T.Fe) was in the range of 55 to 60% by mass, that the open porosity was in the range of 5 to 15%, and that the basicity (CaO concentration / $SiO_2$ concentration) was in the range of 1.8 to 2.2%. The open porosity was measured by a mercury porosimeter method. The others were measured by chemical analysis. The Fe content and the basicity were measured by a titration method.

Regarding the conditions for performing gaseous reduction using the gaseous reducing agent, the reduction temperature of gaseous reduction was set to 900°C, and the flow rate of the gaseous reducing agent was set to 10 L/min. The mass of the agglomerated ore was set to 150 g, and the particle size of the agglomerated ore was set to 10 to 15 mm. The gaseous reduction time was set to 2 hours. Regarding the chemical composition of the gaseous reducing agent, the amount of carbon monoxide (CO) was 95% by volume, and the amount of carbon dioxide ($CO_2$) was 5% by volume.

The temporal change in the gaseous reduction degree R during the experiment was calculated based on the temporal change in the mass of the agglomerated ore detected during the experiment. Specifically, the gaseous reduction degree R was calculated by representing the ratio of oxygen removed from the iron oxides (the agglomerated ore) by mass percent % and converting the change in mass to the reduction degree R based on "JIS M 8713:2021 Iron ores - Determination of reducibility by the final degree of reduction index" using the following formula (1).

[Math. 1]

$$R\ (\%)\ = \frac{\text{Mass removed by reduction (g)}}{\begin{array}{c}\text{Mass of oxygen that was bonded to iron in}\\ \text{measurement sample prior to reduction (g)}\end{array}} \times 100 \quad \cdots (1)$$

It was found, based on the reduction curve obtained from the gaseous reduction experiment, that the lower the FeO concentration in the agglomerated ore, the less likely the stagnation of the reduction reaction via gaseous reduction is to occur, and the higher the final reduction degree after the gaseous reduction. The reduction curve is a curve in a graph showing the temporal change in the gaseous reduction degree R, with time on the horizontal axis and the gaseous reduction degree R on the vertical axis.

The agglomerated ore was observed during the gaseous reduction experiment. Then it was found that the cause of the stagnation of the reduction reaction in the course of the gaseous reduction of the agglomerated ore is the formation of iron oxides enclosed by dense metallic iron in the microstructure of the agglomerated ore. Since the iron oxides enclosed by the dense metallic iron are inhibited from coming into contact with the gaseous reducing agent, the reduction reaction rate may be limited by the diffusion rate of oxygen ions in the agglomerated ore and thereby lowered.

Moreover, it was found from the results of the observation of the agglomerated ore before and after the gaseous reduction that the iron oxides enclosed by the dense metallic iron are easily generated from a secondary hematite phase and a magnetite phase. This is consistent with the experimental results showing that the lower the concentration of FeO in the agglomerated ore, that is, the smaller the amount of magnetite, the less likely the stagnation of the reduction reaction is to occur.

Next, the reduction curve obtained by the gaseous reduction experiment was analyzed using a reduction model that does not consider the stagnation of the gaseous reduction (unreacted core model: see Non Patent Literature 3) to calculate the gaseous reduction degree at which the stagnation of the reduction reaction begins (this gaseous reduction degree is hereinafter referred to as the "stagnant gaseous reduction degree"). Specifically, the reduction curve obtained as the experimental results was fitted to the reduction model, and the reduction degree at which the reduction curve began to deviate from the reduction model was regarded as the onset of stagnation of the reduction.

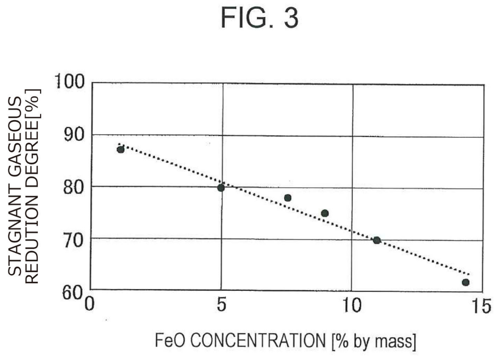

Fig. 3 shows the relation between the concentration of FeO in the agglomerated ore and the stagnant gaseous reduction degree. As shown in Fig. 3, the concentration of FeO in the agglomerated ore has an inversely proportional relationship with the stagnant gaseous reduction degree. As can be seen, as the concentration of FeO in the agglomerated ore decreases, the value of the stagnant gaseous reduction degree increases. Specifically, to adjust the stagnant gaseous reduction degree to be higher than 70%, it is preferable that the concentration of FeO in the agglomerated ore is adjusted to 10% by mass or less. To adjust the stagnant gaseous reduction degree to be higher than 80%, it is more preferable that the concentration of FeO in the agglomerated ore is adjusted to 5% by mass or less.

The experiments on gaseous reduction of the agglomerated ore described in the present embodiment were performed under the conditions described above. However, it is unnecessary that the experimental conditions be limited to the above conditions. Specifically, another reduction test method (such as JIS M 8713:2021 Iron ores - Determination of reducibility by the final degree of reduction index) may be applied. Then the relation between the concentration of FeO in the agglomerated ore and the stagnant gaseous reduction degree is calculated to find the concentration of FeO at which the stagnation of the reduction reaction via gaseous reduction can be prevented.

The concentration of FeO in the agglomerated ore to be charged into the blast furnace may be adjusted based on the experimental results shown in Fig. 3 in order to increase the stagnant gaseous reduction degree of gaseous reduction in the blast furnace. Specifically, in the blast furnace operating method for producing molten pig iron by charging the agglomerated ore from the top of the blast furnace and supplying the gaseous reducing agent from a lower portion of the blast furnace, the concentration of FeO in the agglomerated ore may be adjusted to 10% by mass or less while the amount of the gaseous reducing agent supplied is set to 100 $Nm^3$/t or more.

As described above, in the blast furnace operating method according to the present embodiment, by adjusting (reducing) the concentration of FeO in the agglomerated ore, the stagnant gaseous reduction degree at which the stagnation of the reduction reaction begins can be increased. In the blast furnace process using the gaseous reducing agent, the use ratio of the gaseous reduction of the agglomerated ore can be increased, and the use ratio of the smelting reducing agent can be reduced, so that the $CO_2$ emissions can be reduced.

EXAMPLES

Examples performed based on the blast furnace operating method according to the present embodiment will be described.

In each Example, a virtual physical blast furnace constructed in a cyberspace was used to check the change in coke ratio when a normal temperature gaseous reducing agent (hydrogen gas) was blown from a lower portion of the shaft. The coke ratio means the amount of coke charged from the top of the blast furnace to produce 1 t of molten pig iron. Agglomerated ores with different FeO concentrations were used, and different amounts of the gaseous reducing agent were blown into the blast furnace. The change in the coke ratio in this case was also examined.

With the assumption that the concentration of FeO in the agglomerated ore affects only the stagnation of the reduction reaction via gaseous reduction, a model for the reduction reaction of the agglomerated ore was constructed. Regarding the reduction behavior after the stagnation of the reduction reaction via gaseous reduction, reference was made to Non Patent Literature 4. With the assumption that the reduction degree of the agglomerated ore is limited by the diffusion rate of oxygen ions in metallic iron covering the agglomerated ore, calculation parameters were determined such that the results were consistent with experimental results.

The following two reference operations were used as references for the $CO_2$ reduction ratio. Reference operation 1 was performed in the form of a hot blast operation (blast air temperature: 1100°C, oxygen concentration: 21% by mass, blast air moisture content: 20 g/$Nm^3$, heat loss: 100 Mcal/t, coke ratio: 487 kg/t). Reference operation 2 was performed in the form of an oxygen blast operation (blast air temperature: 25°C, oxygen concentration: 100% by mass, heat loss: 100 Mcal/t, coke ratio: 585 kg/t). In each reference operation, the concentration of FeO in the agglomerated ore was 10% by mass. The ratio of the agglomerated ore in a main raw material was 70% by mass. The results in the Examples are shown in Table 1.

[Table 1]

|  | Operational form | Concentration of FeO in agglomerated ore [%] | Stagnant gaseous reduction degree [%] | Gaseous reducing agent amount [$Nm^3$/t] | Coke ratio [kg/t] | $CO_2$ reduction ratio [%] | Evaluation |
|---|---|---|---|---|---|---|---|
| Reference operation 1 | Hot air blast | 10 | 72 | 0 | 487 | - | - |

(continued)

| | Operational form | Concentration of FeO in agglomerated ore [%] | Stagnant gaseous reduction degree [%] | Gaseous reducing agent amount [Nm$^3$/t] | Coke ratio [kg/t] | CO$_2$ reduction ratio [%] | Evaluation |
|---|---|---|---|---|---|---|---|
| Reference operation 2 | Oxygen blast | 10 | 72 | 0 | 585 | - | - |
| Comparative Example 1 | Hot air blast | 5 | 80 | 0 | 487 | 0 | × |
| Comparative Example 2 | Oxygen blast | 5 | 80 | 0 | 585 | 0 | × |
| Inventive Example 1 | Hot air blast | 10 | 72 | 200 | 450 | 7 | ○ |
| Inventive Example 2 | Hot air blast | 10 | 72 | 400 | 430 | 12 | ○ |
| Inventive Example 3 | Oxygen blast | 10 | 72 | 200 | 548 | 5 | ○ |
| Inventive Example 4 | Oxygen blast | 10 | 72 | 400 | 520 | 10 | ○ |
| Inventive Example 5 | Hot air blast | 1 | 87 | 200 | 438 | 10 | ◎ |
| Inventive Example 6 | Hot air blast | 5 | 80 | 200 | 438 | 10 | ◎ |
| Inventive Example 7 | Hot air blast | 1 | 87 | 400 | 390 | 20 | ◎ |
| Inventive Example 8 | Hot air blast | 5 | 80 | 400 | 400 | 18 | ◎ |
| Inventive Example 9 | Oxygen blast | 5 | 80 | 200 | 530 | 8 | ◎ |
| Inventive Example 10 | Oxygen blast | 1 | 87 | 400 | 480 | 16 | ◎ |

In Table 1, when the result for the "Stagnant gaseous reduction degree" was 72% or more, a "good (o)" rating was given. When the result was 80% or more, a "better (◎)" rating was given. In Comparative Examples 1 and 2, the CO$_2$ reduction ratio was 0%, and a "poor (×)" rating was given.

As shown in Table 1, in Comparative Examples 1 and 2, the gaseous reducing agent amount was 0 Nm$^3$/t, and the ratio of gaseous reduction of the agglomerated ore could not be increased, so that the CO$_2$ reduction ratio was 0%.

However, in Inventive Examples 1 to 4, the concentration of FeO in the agglomerated ore was 10% by mass, and the gaseous reducing agent amount was 200 Nm$^3$/t or more, so that the stagnant gaseous reduction degree of gaseous reduction of the agglomerated ore could be 72%. Therefore, the CO$_2$ reduction ratio could be improved.

In Inventive Examples 5 to 10, the concentration of FeO in the agglomerated ore was 5% by mass or less, and the gaseous reducing agent amount was 200 Nm$^3$/t or more, so that the stagnant gaseous reduction degree of gaseous reduction of the agglomerated ore could be 80% or more. Therefore, the CO$_2$ reduction ratio could be further improved.

## Claims

1. A blast furnace operating method for producing molten pig iron by charging agglomerated ore into a blast furnace from a top of the blast furnace and supplying a gaseous reducing agent from a lower portion of the blast furnace, wherein an amount of the gaseous reducing agent supplied is adjusted to 100 Nm$^3$/t or more, and wherein a concentration of FeO in the agglomerated ore is adjusted to 10% by mass or less.

2. The blast furnace operating method according to claim 1, wherein the concentration of FeO in the agglomerated ore is 5% by mass or less.

# FIG. 1

# FIG. 2

FIG. 3

# EP 4 733 421 A1

## INTERNATIONAL SEARCH REPORT

| International application No. |
|---|
| **PCT/JP2024/025172** |

| A. | CLASSIFICATION OF SUBJECT MATTER |
|---|---|

*C21B 5/00*(2006.01)i; *C22B 1/14*(2006.01)i
FI: C21B5/00 321; C21B5/00 302; C22B1/14

According to International Patent Classification (IPC) or to both national classification and IPC

| B. | FIELDS SEARCHED |
|---|---|

Minimum documentation searched (classification system followed by classification symbols)

C21B5/00; C22B1/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-144966 A (NIPPON STEEL CORPORATION) 03 October 2022 (2022-10-03) claims 1-5, paragraphs [0009]-[0010], [0025]-[0029], [0031]-[0046], table 2, fig. 1-5 | 1-2 |
| A | JP 2022-134616 A (NIPPON STEEL CORPORATION) 15 September 2022 (2022-09-15) entire text | 1-2 |
| A | JP 2004-076143 A (JFE STEEL CORPORATION) 11 March 2004 (2004-03-11) entire text | 1-2 |
| A | WO 2022/264667 A1 (JFE STEEL CORPORATION) 22 December 2022 (2022-12-22) entire text | 1-2 |
| A | JP 2003-342646 A (TETSUGEN CORP.) 03 December 2003 (2003-12-03) entire text | 1-2 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 July 2024** | **06 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/025172**

| Patent document cited in search report | | | Publication date (day/month/year) | Patent family member(s) | | | Publication date (day/month/year) |
|---|---|---|---|---|---|---|---|
| JP | 2022-144966 | A | 03 October 2022 | (Family: none) | | | |
| JP | 2022-134616 | A | 15 September 2022 | (Family: none) | | | |
| JP | 2004-076143 | A | 11 March 2004 | (Family: none) | | | |
| WO | 2022/264667 | A1 | 22 December 2022 | EP entire text CN | 4324938 117413077 | A1 A | |
| JP | 2003-342646 | A | 03 December 2003 | US entire text CN KR | 2004/0025633 1468969 10-0571063 | A1 A B1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3077853 B

- JP 7035869 B

**Non-patent literature cited in the description**

- **TETSU TO HAGANE**. *Journal of the Iron and Steel Institute of Japan*, 1993, vol. 79 (9), N618
- **TETSU TO HAGANE**. *Journal of the Iron and Steel Institute of Japan*, 1993, vol. 79 (10), N711

- **TETSU TO HAGANE**. *Journal of the Iron and Steel Institute of Japan*, 1987, vol. 73 (15), 1956
- **TETSU TO HAGANE**. *Journal of the Iron and Steel Institute of Japan*, 1983, vol. 69 (3), 363